# EUROPÄISCHE PATENTSCHRIFT

(11) **EP 0 336 106 B1**
(45) Veröffentlichungstag und Bekanntmachung des Hinweises auf die Patenterteilung: **05.05.1993**
(21) Anmeldenummer: 89103469.6
(22) Anmeldetag: 28.02.1989
(51) Int. Cl.: B01D 53/36, F01N 3/00, B01J 35/02

(54) **Verfahren zur Herstellung eines Trägerkörpers für einen katalytischen Reaktor**
Process for manufacturing a carrier for a catalytic reactor
Procédé de fabrication d'un support pour réacteur catalytique

(30) Priorität: 22.03.1988 DE 3809490
(43) Veröffentlichungstag der Anmeldung: 11.10.1989
(73) Patentinhaber: Emitec Gesellschaft für Emissionstechnologie mbH, 53797 Lohmar (DE)
(72) Erfinder: Kuchelmeister, Reinhold, Dipl.-Ing. (FH), D-7035 Waldenbuch (DE); Mielke, Josef, Dipl.-Ing. (FH), D-7141 Schwieberdingen (DE)
(74) Vertreter: Kahlhöfer, Hermann, Dipl.-Phys.

(56) Entgegenhaltungen:
- EP-A- 0 245 738
- DE-A- 2 709 003
- US-A- 3 853 485
- US-A- 4 170 629

## Beschreibung

Die Erfindung betrifft ein Verfahren zur Herstellung eines Trägerkörpers für einen katalytischen Reaktor nach dem Oberbegriff des Patentanspruches 1.

Verfahren zur Herstellung von Trägerkörpern aus gewickelten Metallbändern sind bekannt (DE-A-35 43 011 oder DE-U-84 38 260). Der Vorteil dieser aus sehr dünnen Metallbändern gewikkelten Trägerkörper besteht gegenüber den ebenfalls bekannten Keramikträgerkörpern in dem wesentlich geringeren Gewicht und in der bei gleichem Platzbedarf größeren Reaktionsfläche. Da Abgaskatalysatoren, insbesondere im Kraftfahrzeugbau, in die von den Motoren kommenden Abgasleitungen eingesetzt werden, werden sie aufgrund des sich in den Leitungen ausbildenden Strömungsprofiles, das zu den Rohrwandungen hin abfällt, im wesentlichen nur in ihrem mittleren Bereich vom durchströmenden Gas beaufschlagt. Dies gilt insbesondere, wenn, wie üblich, der Querschnitt des Katalysatorkörpers erheblich größer als jener des Abgasrohres ist, damit durch den Einbau des Katalysators kein allzu großer Strömungswiderstand auftritt. In diesem Fall werden die radial außenliegenden Bereiche des Katalysators nicht in gleichem Maß vom Abgas durchströmt. Dies führt dazu, daß die Katalysatoren in ihrer Mitte "ausbrennen" und die ihnen an sich innewohnende Umwandelkapazität nicht ausgenützt wird.

Es ist deshalb auch schon bekannt geworden (DE-A-35 36 315), in den Abgasleitungen vor dem Katalysatorkörper einen Drallkörper einzubauen, der dafür sorgt, daß das strömende Abgas auch die Außenbereiche des Katalysatorkörpers erreicht und möglichst gleichmäßig die Reaktorflächen anströmt. Der Einbau zusätzlicher Drallkörper stellt aber einen Aufwand dar, der insbesondere bei der Serienherstellung von Katalysatoren für den Kraftfahrzeugbau vermieden werden sollte.

Aus der EP-A-02 45 738 ist es zwar bekannt, einen aus Metallbändern bestehenden Trägerkörper für einen Abgaskatalysator dadurch herzustellen, daß zwei konzentrisch ineinanderliegende Bereiche mit unterschiedlichen Strömungsquerschnitten der Wellbänder vorgesehen werden. Dort ist jedoch nur der innere Teil des Trägerkörpers aus einem Glatt- und einem Wellband gewikkelt, während der äußere Körper, um thermische Wechselbelastungen im Trägerkörper zu vermeiden, auf einen diesen inneren Körper umgebenden hülsenförmigen Mantel aufgesetzt ist, der seinerseits über eine radial verlaufende Trennwand mit einem Außenmantel verbunden ist. Die Wellbänder und die Glattbänder in dem äußeren Bereich dieses Trägerkörpers sind jeweils mit beiden Enden in radialen Abständen zueinander an dieser Trennwand befestigt und dadurch in radialen Lagen übereinander geschichtet.

Aus der US-A 38 53 485 ist schließlich ein aus Keramik bestehender Katalysatorkörper bekannt, bei dem der Strömungsquerschnitt der einzelnen in dem Keramikkörper gebildeten Kanäle von innen nach außen zunimmt, um eine gleichmäßigere Durchströmung des Katalysators zu ermöglichen. Keramikkatalysatoren werden aber in vollkommen anderer Weise hergestellt als das bei den eingangs erwähnten metallischen Trägerkörpern der Fall ist.

Der Erfindung liegt daher die Aufgabe zugrunde, ein Verfahren der eingangs genannten Art so weiterzubilden, daß sich metallische Trägerkörper mit über ihren Querschnitt unterschiedlich großen Durchströmungskanälen herstellen lassen. Zur Lösung dieser Aufgabe wird zum einen vorgesehen, daß zunächst ein innerer Kern durch Wickeln eines ersten Metallbandes gebildet wird, auf den mindestens ein weiteres Metallband mit durch verschiedene Höhe oder durch verschiedene Teilung der Wellungen größeren Durchstömquerschnitten aufgewickelt wird. Eine andere Möglichkeit der Herstellung besteht darin, daß ein durchgehendes metallisches Wellband mit oder ohne Glattband zu dem Trägerkörper gewickelt wird, dessen Wellprofil sich so ändert, daß die Querschnitte der Wellungen sich von der Wickelachse nach außen vergrößern.

Vorteilhafte Weiterbildungen der Erfindung sind in den Unteransprüchen gekennzeichnet, die für beide Lösungsvorschläge besonders einfache Ausgestaltungsmöglichkeiten umreißen. Gegenüber einem metallischen Trägerkörper, der in herkömmlicher Weise hergestellt ist, weisen die durch das erfindungsgemäße Verfahren hergestellten Trägerkörper den Vorteil auf, daß sie in ihrer Mitte den größten Strömungswiderstand und den geringsten im äußeren Bereich am Mantel aufweisen. Die Abgasdurchströmung wird daher gleichmäßiger. Ein Ausbrennen des Trägerkörpers in seiner Mitte, wie es bei metallischen Trägerkörpern immer wieder auftritt, wird dadurch vermieden. Es wird auch der Vorteil erreicht, daß wegen der außenliegenden größeren Wellungen weniger Kontaktstellen zum Außenmantel vorliegen, weil der Abstand der Wellenberge größer ist. Dadurch kann ein geringerer Wärmeübergang zwischen Trägerkörper und Mantel erreicht werden, durch den eine an sich unerwünschte Wärmeabfuhr über den Mantel klein gehalten werden kann. Damit wird die Kaltstartkonvertierung (das sogenannte Anspringverhalten der Matrix) verbessert.

Schließlich wird auch der Vorteil erreicht, daß der metallische Trägerkörper aufgrund der variablen Zellendichten zum Mantel hin elastischer wird als ein in herkömmlicher Weise hergestellter Trägerkörper. Diese Elastizität bewirkt im Betrieb, wo hohe Temperaturen auftreten und insbesondere beim Anfahrvorgang, daß weniger Spannungen auftreten. Die Lebensdauer der neuen Trägerkörper kann daher größer als die herkömmliche Trägerkörper sein.

In der Zeichnung ist die Erfindung anhand von Ausführungsbeispielen dargestellt und wird im folgenden erläutert. Es zeigen:
- Fig. 1: eine schematische Darstellung einer Stirnansicht eines neuen Trägerkörpers für einen katalytischen Reaktors, der aus mehreren Metallbändern mit unterschiedlichem Wellprofil gewickelt ist,
- Fig. 2: die schematische Darstellung der für die Wicklung der einzelnen Bereiche des Trägerkörpers der Fig. 1 verwendeten Wellbänder,
- Fig. 3: die schematische Darstellung eines Wellbandes, dessen Wellprofil mit zunehmender Länge größer wird,
- Fig. 4: die schematische Darstellung der Stirnansicht eines Trägerkörpers, ähnlich Fig. 1, der unter Zuhilfenahme eines Wellbandes gemäß Fig. 3 durch Wickeln hergestellt ist,
- Fig. 5: die schematische Darstellung einer Herstellungsmöglichkeit des Wellbandes gemäß Fig. 3,
- Fig. 6: die schematische Darstellung des durch die Erfindung bewirkten Strömungsprofiles im Trägerkörper im Vergleich zu dem Strömungsprofil eines bekannten Trägerkörpers.

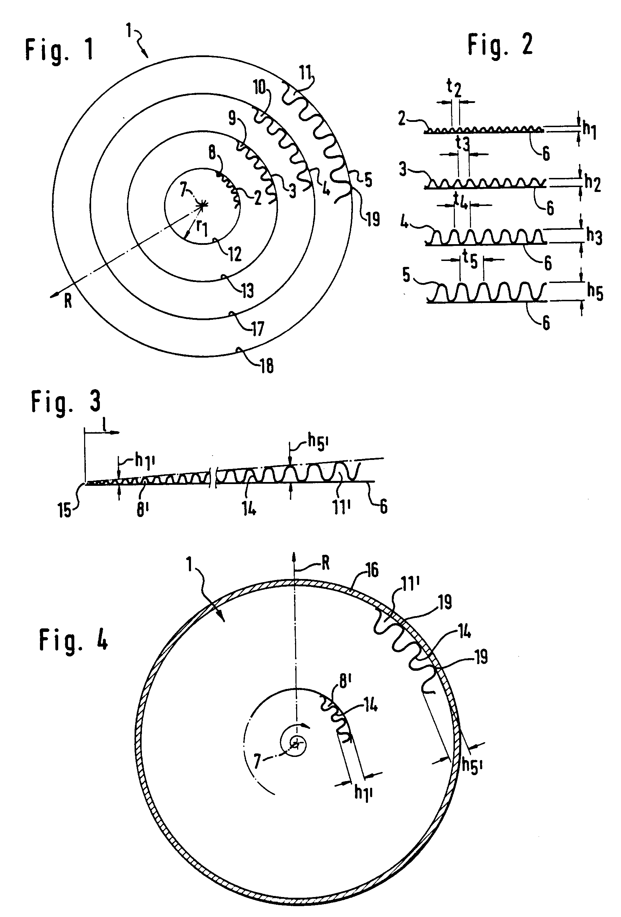

Der in der Fig. 1 in der Stirnansicht schematisch dargestellte Trägerkörper (1) ist unter Zuhilfenahme von vier gewellten Metallbändern (2, 3, 4 und 5) hergestellt, deren Form in Fig. 2 schematisch angedeutet ist. Zur Herstellung des Trägerkörpers (1) wird zunächst ausgehend von der Wickelachse (7) das Metallband (2) mit der geringsten Profilhöhe (h₁) in bekannter Weise zusammen mit einem Glattband (6) spiralig gewickelt, bis der so geschaffene Wickelkern (12) einen Durchmesser aufweist, der zweimal dem Radius (r₁) entspricht. Auf den so geschaffenen zylindrischen Wickelkern (12) wird dann ein Hülsenkörper (13) aufgesetzt, der aus dem Wellband (3) - zusammen mit einem Glattband (6) - gebildet ist, dessen Wellhöhe (h₂) und Teilung (t₃) größer ist als die entsprechende Höhe (h₁) bzw. Teilung (t₂). Dabei kann so vorgegangen werden, daß ein Ende des Wellbandes (3) am Umfang des Wickelkernes (12) so fixiert wird, daß die Seitenkanten des Bandes (3) mit den Stirnkanten des Wickelkörpers (12) fluchten. Ist dies geschehen,so kann durch Drehung des Wickelkernes (12) das Band (3) aufgewickelt werden, bis der Hülsenkörper (13) mit seinem vorbestimmten Durchmesser hergestellt ist. In gleicher Weise werden dann auf den Hülsenkörper (13) weitere Hülsenkörper (17 und 18) aufgesetzt, die jeweils durch Wickeln der Bänder (4 bzw. 5) hergestellt werden, die ihrerseits eine größere Profilhöhe (h₃ bzw. h₅) und auch eine größere Teilung (t₄ bzw. t₅) gegenüber den radial inneren Bändern aufweisen. Dazu können die Wellbänder mit unterschiedlicher Wellung entweder vor dem Wickeln oder auch während des Aufwickelns mit ihren Endkanten aneinandergepunktet oder -geheftet werden. Es entsteht auf diese Weise der Trägerkörper (1), dessen freie Querschnitte der Kanäle (8, 9, 10 und 11) in den Bereichen (12, 13, 17 und 18) von innen nach außen stufenförmig größer werden. Der Strömungswiderstand eines solchen Trägerkörpers nimmt daher von innen nach außen ab. Ein solcher Trägerkörper kann daher sehr gleichmäßig, auch in seinen Außenbereichen, vom Abgas durchströmt werden. Die katalytische Beschichtung des Trägerkörpers kann daher gleichmäßig zum Einsatz kommen. Dadurch kann die Wirksamkeit des Reaktors verbessert werden.

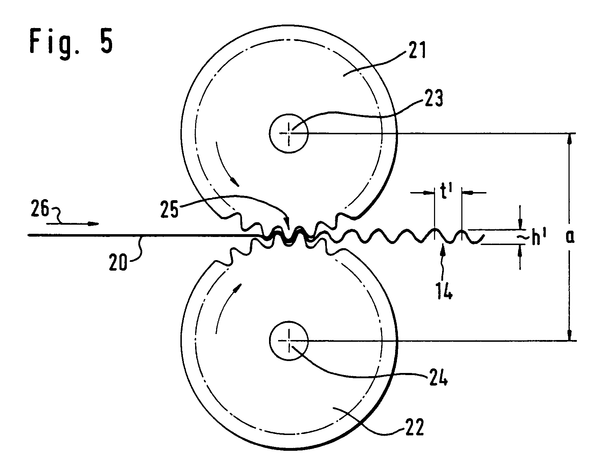

Die Fig. 3 zeigt schematisch, daß ein einziges durchgehendes Wellband ebenfalls vorgesehen werden kann, wenn dieses Wellband ausgehend von einer Anfangskante (15) mit einem Wellprofil versehen wird, das kontinuierlich immer größer wird und analog der verschiedenen Bänder (2 bis 5) der Fig. 2 eine ständig zunehmende Profilhöhe (h₁, bzw. h₅,) und eine zunehmende Teilung besitzt. Auch auf diese Weise läßt sich dann von dem Wellband (14) beim Wickeln, ebenfalls mit einem Glattband eine Ausführung bilden, bei der Kanäle (8′ bzw 11′) vorgesehen sind, die einen unterschiedlichen freien Querschnitt aufweisen. Wird ein solches Band (14) ausgehend von der Anfangskante (15) von einer Wickelachse (7) aus aufgewickelt, wie das in Fig. 4 dargestellt ist, dann entsteht auch dann ein Trägerkörper, der in seiner Mitte eine größeren Strömungswiderstand als in seinen Außenbereichen aufweist. Wie bei Betrachtung der Fig. 1 und 4 ohne weiteres deutlich wird, besitzt ein solcher Trägerkörper, wenn er in einen Mantel (16) eingeschoben ist, Berührungsflächen (19) mit dem Mantel nur im Bereich der Wellenberge der äußersten Lage des gewickelten Bandes (14) bzw. (Fig. 1) des Bandes (5). Da hier die Teilung (t₅) größer ist als im inneren Bereich des Bandes (2) bzw. im Anfangsbereich des Bandes (14), entstehen, verglichen mit bekannten gewickelten Trägerkörpern,weniger Berührungsstellen zwischen Trägerkörper und Mantel. Der an sich unerwünschte Wärmeübergang vom Trägerkörper (1) zum Mantel (16) kann daher verringert werden. Die Abkühlung über dem Mantel (16) wird geringer. Damit wird die Kaltstart-Konvertierung (das sogenannte Anspringverhalten der Matrix) verbessert.

In der Fig. 5 ist schematisch eine Vorrichtung gezeigt, mit der das Wellband (14) der Fig. 3 beispielsweise herstellbar ist.

Diese Vorrichtung besteht aus zwei Zahnwalzen (21 und 22), deren Zahnprofil aufeinander abgestimmt ist und die mit diesem Zahnprofil in einem Spaltbereich (25) ineinandergreifen. Diesem Spaltbereich (25) wird ein glattes Metallband (20) im Sinn des Pfeiles (26) zugeführt, das durch die mindestens teilweise ineinandergreifenden Zähne der Verzahnungen zu dem Wellband (14) verformt wird. Während des Durchlaufens des Glattbandes (20) wird dabei der Abstand (a) der Drehachsen (23 bzw. 24) der beiden Zahnwalzen (21 und 22) kontinuierlich etwas vergrößert, so daß dadurch die Höhe (h′) der am Band (14) erzeugten Wellungen ebenfalls kontinuierlich größer wird. Die Teilung (t′) bleibt dabei zwar gleich groß. Diese Teilung läßt sich aber durch Strecken bzw. Auseinanderziehen des Wellbandes vergrößern oder durch Raffen verkleinern. Es wird damit möglich, ein Wellband gemäß Fig. 3 herzustellen, bei dem in einer Richtung sowohl die Höhe der Wellungen als auch deren Teilung zunimmt.

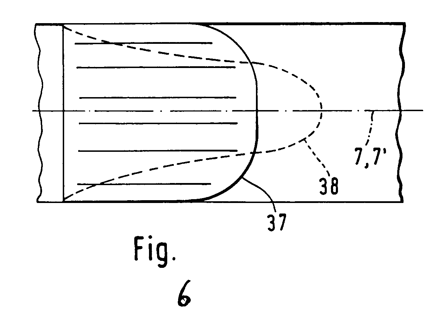

Fig. 6 macht deutlich, daß, bedingt durch den größeren Strömungswiderstand im Bereich der Mittelachsen (7, 7′) eine Vergleichmäßigung des Strömungsprofiles (37) über den Querschnitt gegenüber dem Strömungsprofil (38) üblicher Trägerkörper mit gleich großen Strömungskanalquerschnitten erreicht wird, die auch zu einer gleichmäßigen Temperaturverteilung innerhalb des Katalysators und damit auch zu einer höheren Lebensdauer führen kann.

## Patentansprüche

1. Verfahren zur Herstellung eines Trägerkörpers (1) für einen katalytischen Reaktor, bei dem ein gewelltes, oder ein gewelltes und ein glattes Metallband spiralförmig von einer Wickelachse ausgehend aufgewickelt werden und der so entstandene, mit parallel zu seiner Mittelachse verlaufenden Kanälen mit bestimmten, vom Abgas durchströmten Querschnitten versehene Körper in einen Mantel eingesetzt wird, dadurch gekennzeichnet, daß zunächst ein innerer Kern (12) durch Wickeln eines ersten Metallbandes (2) gebildet wird, auf den mindestens ein weiteres Metallband (3, 4, 5) mit durch verschiedene Höhe (h₂, h₃, h₄) oder durch verschiedene Teilung (t₃, t₄, t₅) der Wellungen größeren Durchströmquerschnitten aufgewickelt wird.

2. Verfahren nach Anspruch 1, dadurch gekennzeichnet, daß ein Ende des Wellbandes (3) mit den größeren Durchströmquerschnitten am Umfang des inneren Kernes (12) so fixiert wird, daß seine Seitenkanten mit den Stirnkanten des Kernes fluchten, und daß dann durch Drehung des Kernes (12) das weitere Metallband (3) auf den Kern gewickelt wird.

3. Verfahren nach Anspruch 1 und 2, dadurch gekennzeichnet, daß mindestens noch ein weiteres Metallband (4, 5) auf den von dem auf den Kern (12) aufgewickelten Metallband (3) gebildeten Hülsenkörper (13) aufgewickelt wird, das seinerseits wieder durch größere Teilung (t₄, t₅) oder Höhe (h₃, h₄) der Wellungen größere Durchströmquerschnitte als das den Hülsenkörper (13) bildende Metallband (3) aufweist.

4. Verfahren zur Herstellung eines Trägerkörpers (1) für einen katalytischen Reaktor, bei dem ein gewelltes, oder ein gewelltes und ein glattes Metallband spiralförmig von einer Wickelachse ausgehend aufgewickelt werden und der so entstandene, mit parallel zu seiner Mittelachse verlaufenden Kanale mit bestimmten, vom Abgas durchströmten Querschnitten versehene Körper in einen Mantel eingesetzt wird, dadurch gekennzeichnet, daß ein durchgehendes metallisches Wellband (14) mit oder ohne Glattband zu dem Trägerkörper gewickelt wird, dessen Wellprofil sich so ändert, daß die Querschnitte der Wellungen sich von der Wickelachse (7) nach außen vergrößern.

5. Verfahren nach Anspruch 4, dadurch gekennzeichnet, daß sich das Wellprofil des Wellbandes (14) kontinuierlich ändert und daß das Wellband mit dem Ende mit dem kleinsten Wellprofil (8') zuerst aufgewickelt wird.

6. Verfahren nach Anspruch 4 oder 5, dadurch gekennzeichnet, daß das Wellband (14) mit wachsendem Profil zunächst aus einem Glattband durch einen beweglichen Zahnwalzenstock (21, 22) hergestellt wird, bei dem sich der Abstand (9) der beiden Zahnwalzen verändern läßt und daß das so hergestellte Wellband dann aufgewickelt wird.

## Claims

1. A process for producing a carrier body (1) for a catalytic reactor in which a corrugated or a corrugated and a smooth metal strip are wound in a spiral configuration, starting from a winding axis, and the resulting body which is provided with ducts extending parallel to its centre line and having given cross-sections through which the exhaust gas flows is fitted into a casing, characterised in that firstly an inner core (12) is formed by winding a first metal strip (2), on to which core at least one further metal strip (3, 4, 5) is wound, with through-flow cross-sections which are larger by virtue of a different height (h₂, h₃, h₄) or by virtue of a different pitch (t₃, t₄, t₅) in respect of the corrugations.

2. A process according to claim 1 characterised in that an end of the corrugated strip (3) with the larger through-flow cross-sections is fixed to the periphery of the inner core (12) in such a way that its side edges are aligned with the side edges of the core, and that the further metal strip (3) is then wound on to the core (12) by rotating the core.

3. A process according to claim 1 and claim 2 characterised in that at least one further metal strip (4, 5) is wound on to the tubular body (13) which is formed by the metal strip (3) which is wound on to the core (12), which further strip (4,5) in turn again has larger through-flow cross-sections than the metal strip (3) forming the tubular body (13), by virtue of a larger pitch (t₄, t₅) or height (h₃, h₄) of the corrugations.

4. A process for producing a carrier body (1) for a catalytic reactor in which a corrugated or a corrugated and a smooth metal strip are wound in a spiral configuration, starting from a winding axis, and the resulting body which is provided with ducts extending parallel to its centre line and having given cross-sections through which the exhaust gas flows is fitted into a casing, characterised in that a continuous metal corrugated strip (14) is wound with or without a smooth strip to form the carrier body, the corrugation profile of which changes in such a way that the cross-sections of the corrugations increase in size outwardly from the winding axis (7).

5. A process according to claim 4 characterised in that the corrugation profile of the corrugated strip (14) changes continuously and that the corrugated strip is wound on firstly with the end having the smallest corrugation profile (8').

6. A process according to claim 4 or claim 5 characterised in that the corrugated strip (14) with an increasing profile is firstly produced from a smooth strip by a cable toothed roll unit (21, 22) in which the spacing (9) between the two toothed rolls can be changed and that the corrugated strip produced in that way is then wound on.

## Revendications

1. Procédé de production d'un corps support (1) pour un réacteur catalytique, dans lequel on enroule en spirale, en éloignement d'un axe d'enroulement, une bande métallique ondulée, ou une bande métallique ondulée et une bande métallique lisse, et on place dans une enveloppe le corps, ainsi obtenu, pourvu de canaux s'étendant parallèlement à son axe médian avec des sections droites déterminées traversées par le gaz d'échappement, caractérisé en ce que l'on forme tout d'abord un noyau interne (12) par enroulement d'une première bande métallique (2), sur laquelle on enroule au moins une autre bande métallique (3, 4, 5) présentant des sections droites de traversée de flux plus grandes du fait de hauteurs différentes (h₂, h₃, h₄) d'ondulations ou du fait de périodicités différentes (t₃, t₄, t₅) entre ondulations.

2. Le procédé de la revendication 1, caractérisé en ce que l'on fixe à la périphérie du noyau interne (12) une extrémité de la bande ondulée (3) présentant des sections droites de traversée de flux plus grandes d'une manière telle que ses bords latéraux s'alignent sur le bord frontal du noyau (12) et que, par rotation du noyau (12), l'autre bande métallique (3) vienne ensuite s'enrouler sur le noyau.

3. Le procédé de la revendication 1 ou 2, caractérisé en ce que l'on enroule sur le corps fourreau (12) formé par la bande métallique (3) enroulée sur le noyau (12) encore au moins une autre bande métallique (4,5), qui, quant à elle, présente à nouveau des sections droites de traversée de flux plus grandes, du fait d'une plus grande périodicité (t₄, t₅) ou hauteur (h₃, h₄) des ondulations, que pour la bande métallique (3) constituant le corps fourreau.

4. Procédé de production d'un corps support (1) pour un réacteur catalytique, dans lequel on enroule en spirale, en éloignement d'un axe d'enroulement, une bande métallique ondulée, ou une bande métallique ondulée et une bande métallique lisse, et on place dans une enveloppe le corps ainsi obtenu, pourvu de canaux s'étendant parallèlement à son axe médian avec des sections droites déterminées traversées par le gaz d'échappement, caractérisé en ce que l'on enroule en ce corps support, avec ou sans bande lisse, une bande métallique ondulée continue (14) dont le profil d'ondulation varie de manière que les sections droites des ondulations aillent en augmentant au fur et à mesure que l'on s'éloigne de l'axe d'enroulement (7).

5. Le procédé de la revendication 4, caractérisé en ce que le profil d'ondulation de la bande ondulée (14) varie continûment et en ce que l'on enroule la bande ondulée en commençant par l'extrémité présentant profil d'ondulation le plus réduit (8').

6. Le procédé de la revendication 4 ou 5, caractérisé en ce que l'on produit la bande ondulée (14) avec un profil croissant initialement à partir d'une bande lisse au moyen d'une barre à cylindres dentés mobile (21, 22), dont on permet à l'intervalle (9) entre les deux cylindres de se modifier et en ce que l'on enroule ensuite la bande ondulée ainsi produite.
